# EUROPÄISCHE PATENTSCHRIFT

(11) **EP 1 307 796 B1**
(45) Veröffentlichungstag und Bekanntmachung des Hinweises auf die Patenterteilung: **30.03.2005**
(21) Anmeldenummer: 01956397.2
(22) Anmeldetag: 27.07.2001
(51) Int. Cl.: G05B 19/418, H04L 12/40

(54) **NETZWERK MIT EINER DATENÜBERTRAGUNG IN ÄQUIDISTANTEN ZYKLEN**
NETWORK THAT TRANSMITS DATA IN EQUIDISTANT CYCLES
RESEAU AVEC TRANSMISSION DE DONNEES PAR CYCLES EQUIDISTANTS

(30) Priorität: 31.07.2000 DE 10037360
(43) Veröffentlichungstag der Anmeldung: 07.05.2003
(73) Patentinhaber: SIEMENS AKTIENGESELLSCHAFT, 80333 München (DE)
(72) Erfinder: KATZENBERGER, Otmar, 76534 Baden Baden (DE); KÖLLNER, Christoph, 93053 Regensburg (DE); MENSINGER, Jörg, 76149 Karlsruhe (DE); RUDI, Heinrich, 76185 Karlsruhe (DE)
(86) Internationale Anmeldenummer: PCT/DE2001/002852
(87) Internationale Veröffentlichungsnummer: WO 2002/010871

(56) Entgegenhaltungen:
- FR-A- 2 652 467
- KLEHMET U ET AL: "LEISTUNGSBEWERTUNG DER FELDBUS-PROTOKOLLE PROFIBUS UND FIP (TEIL 1). \THE FIELDBUS PROTOCOL STANDARDS PROFIBUS AND FIP: A PERFORMANCE COMPARISON (PART 1)" AUTOMATISIERUNGSTECHNISCHE PRAXIS - ATP, OLDENBOURG VERLAG. MUNCHEN, DE, Bd. 35, Nr. 6, 1. Juni 1993 (1993-06-01), Seiten 355-360, XP000382391 ISSN: 0178-2320
- CENA G ET AL: "Standard field bus networks for industrial applications" COMPUTER STANDARDS AND INTERFACES, ELSEVIER SEQUOIA. LAUSANNE, CH, Bd. 17, Nr. 2, 15. Januar 1995 (1995-01-15), Seiten 155-167, XP004046736 ISSN: 0920-5489
- VOLZ M: "PROFIBUS-DP - DER SCHNELLE BRUDER STANDARDISIERTE KOMMUNIKATION FUR DIE DEZENTRALE PERIPHERIE" ELEKTRONIK, FRANZIS VERLAG GMBH. MUNCHEN, DE, Bd. 42, Nr. 26, 28. Dezember 1993 (1993-12-28), Seiten 50-53,58-60, XP000421408 ISSN: 0013-5658

## Beschreibung

Die Erfindung betrifft ein Verfahren zum Betreiben eines Teilnehmers in einem Netzwerk nach dem Oberbegriff des Anspruchs 1 sowie einen Teilnehmer für ein Netzwerk nach dem Oberbegriff des Anspruchs 4 und ein Speichermedium mit einem Programm nach Anspruch 5.

Bei der Kommunikation in einem Netzwerk nach der Profibus DP Spezifikation gibt es die Möglichkeit, Nutzdaten zwischen Master und Slaves in äquidistanten Zyklen zu übertragen. Als Master wird dabei derjenige Netzwerkteilnehmer bezeichnet, der Inhaber des Buszugriffsrechts ist und andere Teilnehmer, die Slaves, nacheinander nach Art eines Polling zur Datenübertragung aufruft. Im Äquidistanzbetrieb findet die Übertragung der Nutzdaten zwischen dem Master und den Slaves in exakt gleichen, d.h. äquidistanten Zyklen statt. Die Dauer eines Zyklus kann dabei durch Projektierung vorgegeben werden und beträgt typischer Weise einige Millisekunden. Im Äquidistanzbetrieb wird somit eine hohe zeitliche Synchronität am Bus zwischen Master und den zugeordneten Slaves erreicht, die insbesondere für taktsynchrone Antriebskopplungen im Bereich der Bewegungssteuerung benötigt wird.

Beispielsweise zeigt "Klement" (XP 382 391) ein Verfahren über den Medien zugriff bein Profibus. Die Druckschrift FR-A-2 652 467 zeigt ein exemplarisches Synchronisation verfahren.

Aus dem Siemens-Handbuch "SIMATIC NET - Programmierschnittstelle DP-Base für CP 5613/CP 5614", Ausgabe 05/2000, BestellNr. C79000-G8900-C139-04, ist ein Kommunikationsprozessor (CP) bekannt, der als Steckkarte in einen Personal Computer (PC) mit PCI-Bus gesteckt werden kann. Er ist als Master in einem Netzwerk nach Profibus-DP-Spezifikation im Äquidistanzmodus betreibbar. Dabei läuft das Programm einer DP-Anwendung auf dem PC, während der CP mit seinem integrierten Mikroprozessor die Kommunikation über den Feldbus abwickelt. Als Schnittstelle zwischen der auf dem PC ablaufenden DP-Anwendung und dem Kommunikationsprozessor dient ein Dual-Port-RAM (DPR) das auf der Steckbaugruppe des Kommunikationsprozessors angeordnet und somit in diesen integriert ist. In diesem DPR wird quasi ein Prozessabbild gehalten. Darin sind vor allem die Eingabe, Ausgabe und Diagnosedaten der Slaves enthalten, aber auch Zustands- und Konfigurationsdaten. Wenn die DP-Anwendung z.B. gerade Daten eines Slaves aus dem Prozessabbild liest und im gleichen Augenblick der Kommunikationsprozessor diese mit neuen Daten überschreibt, könnte die DP-Anwendung die ersten Bytes des Datensatzes vom vorigen DP-Zyklus und die letzten Bytes vom aktuellen Zyklus erhalten. Damit wären die Daten verfälscht und inkonsistent. Die Regeln für Äquidistanzbetrieb, z.B. in takt synchronen Antriebskopplungen, schreiben daher vor, dass nur in denjenigen Zeitabschnitten eines Zyklus, in denen keine Nutzdaten zwischen Master und Slaves übertragen werden, die DP-Anwendung die Ist-Wert-Erfassung der Slaves oder die Soll-Wert-Vorgabe an die Slaves durchführen darf.

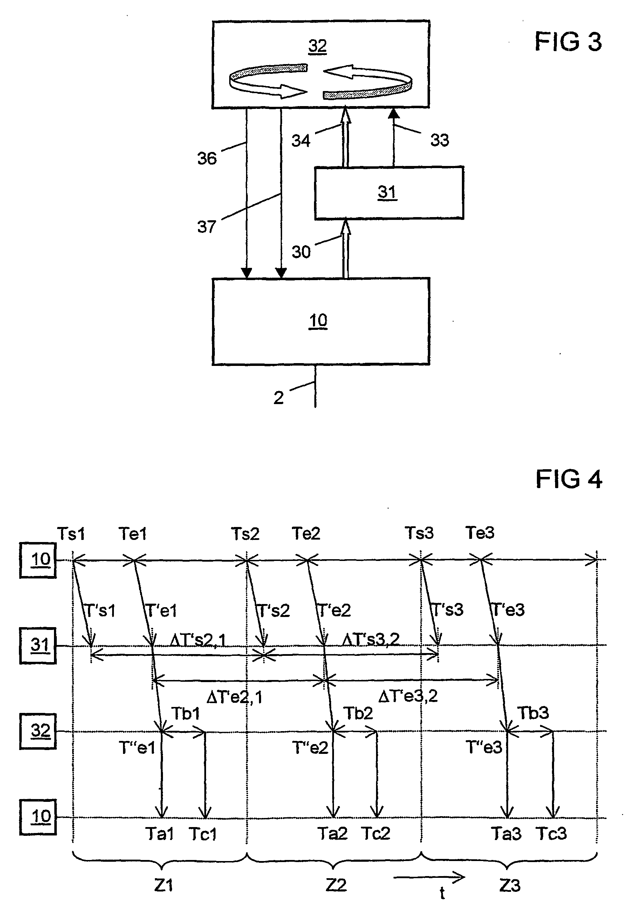

Figur 2 zeigt eine vereinfachte Darstellung eines Zyklus nach der Profibus-DP-Spezifikation im Aquidistanzbetrieb. Eine Zeitachse t verläuft dabei von links nach rechts. Zur gemeinsamen Synchronisation der Slaves wird jeweils vor Beginn eines Aquidistanzzyklus Z,x ein Global Control Telegramm GC,x-1 gesendet. Der Zyklus Zx beginnt mit einem zyklischen Teil ZYK,x, in welchem die Nutzdaten zwischen Master und Slaves ausgetauscht werden. Beginn und Ende des zyklischen Teils ZYK,x können der DP-Anwendung in einem PC durch Ausgabe eines Zyklus-Start-Interrupts ZSI,x bzw. eines Zyklus-Ende-Interrupt ZEI,x angezeigt werden. Nach Ablauf des zyklischen Teils ZYK,x folgt ein azyklischer Teil AZYK,x des Äquidistanzzyklus Z,x. Nach dem Ende des azyklischen Teils AZYK,x wird wiederum ein Global Control Telegramm GC,x zur Synchronisation der Slaves vor Beginn des nächsten Äquidistanzzyklus Z,x+1 gesendet. Der Beginn eines zyklischen Teils ZYK,x+1 im nicht mehr vollständig dargestellten Äquidistanzzyklus Zx+1 kann wiederum mit einem Zyklus-Start-Interrupt ZSI,x+1 der DP-Anwendung im PC mitgeteilt werden. Die Dauer TDP eines Zyklus im Äquidistanzbetrieb ergibt sich somit als der zeitliche Abstand zwischen dem Zyklus-Start-Interrupt ZSI,x und dem darauf folgenden Zyklus-Start-Interrupt ZSI,x+1. Diese kann bei der Projektierung des Netzwerkes eingestellt werden. In einem Zeitabschnitt TDPR, der sich aus dem azyklischen Teil AZYK,x und der Sendezeit des Global Control Telegramms GC,x zusammensetzt, kann die DP-Anwendung im PC auf das Dual-Port-RAM des Kommunikationsprozessors zugreifen, ohne dass die Konsistenz der Datensätze des Prozessabbilds gefährdet wäre.

Die Synchronisation zwischen einem Thread auf dem PC, welcher die DP-Anwendung ausführt, im folgenden DP-Bearbeitungs-Thread genannt, und dem Kommunikationsprozessor kann somit interruptgesteuert über einen in das Betriebssystem, z.B. Windows NT integrierten Gerätetreiber erfolgen. Hierbei sendet der Kommunikationsprozessor in jedem Zyklus Z,i einen Zyklus-Start-Interrupt ZSI,i und einen Zyklus-Ende-Interrupt ZEI,i an den Treiber. Über Mechanismen des Betriebssystems, z.B. Weiterschalten einer Windows-Semaphore, aktiviert danach der Treiber den an der Semaphore wartenden DP-Bearbeitungs-Thread der DP-Anwendung. Bedingt durch eine Vielzahl von Betriebssystem und Rechnereigenschaften, wie z.B. CPU-Geschwindigkeit, Zahl der installierten Steckkarten, Verdrängungseffekte durch Taskwechsel und Prioritätsschema, konkurrierender Betrieb mehrerer Treiber usw., ist die Zeit zwischen Generierung der Interrupts und der Aktivierung des DP-Bearbeitungs-Thread in vielen Fällen nicht deterministisch. Als Folge davon kann die Aktivierung der DP-Anwendung ständig oder sporadisch derart verzögert werden, dass der Zugriff auf das Prozessabbild im Kommunikationsprozessor zu einem nicht erlaubten Zeitpunkt erfolgt. Als Folge einer derartigen Zugriffsverletzung werden die Daten des Prozessabbilds in regelungstechnischer Hinsicht in einem falschen Zeitpunkt gelesen und aktualisiert. Es können schwerwiegende Betriebsstörungen oder Schäden an einer prozesstechnischen Anlage entstehen, die durch die Feldbuskomponenten des Profibus DP Netzwerks gesteuert wird. Müssen beispielsweise in einem Walzwerk bei der Verarbeitung von Stahl sich alle Walzen absolut synchron bewegen, so könnte eine falsche Regelung zu einer ungleichmäßigen Stärke des gewalzten Stahls führen.

Der Erfindung liegt die Aufgabe zugrunde, ein Verfahren zum Betreiben eines Teilnehmers in einem Netzwerk, sowie einen Teilnehmer in einem Netzwerk sowie einen ein Speichermedium mit einem Programm für einen derartigen Teilnehmer zu schaffen, durch welche derartige Zugriffsverletzungen während des Betriebs erkannt und angezeigt werden, damit geeignete Maßnahmen zur Fehlerbehandlung eingeleitet werden können.

Zur Lösung dieser Aufgabe weist das neue Verfahren der eingangs genannten Art die im kennzeichnenden Teil des Anspruchs 1 angegebenen Schritte auf.

In den abhängigen Ansprüchen sind vorteilhafte Weiterbildungen der Erfindung, in Anspruch 4 ein erfindungsgemäßer Teilnehmer und in Anspruch 5 ein erfindungsgemäßer Kommunikationsprozessor beschrieben.

Die Erfindung hat den Vorteil, dass Zugriffsverletzungen auf eine sichere und zuverlässige Weise erkannt werden. Dabei kann der feste Zeitpunkt, zu welchem der Kommunikationsprozessor ein erstes Synchronisationssignal an die Recheneinheit sendet, prinzipiell beliebig innerhalb des Zyklus gewählt werden. Wenn er um eine bestimmte Zeitdauer vor Beginn des zyklischen Teils eines Zyklus liegt, muss durch geeignete Maßnahmen in der Recheneinheit sichergestellt werden, dass die Recheneinheit nach erneutem Freischalten des Synchronisationssignals nur maximal bis zum Verstreichen dieses Zeitraums Zugriffe auf den Speicher aufführt. Als Möglichkeiten zur Anzeige eines Zugriffs ohne Zugriffsberechtigung seien eine entsprechende Ausgabe einer Meldung auf einem Bediengerät oder die Erzeugung einer Meldung an eine Fehlerbehandlungsroutine in der Recheneinheit oder dem Kommunikationsprozessor genannt, damit ein gesteuerter Prozess in einen Sicherheitszustand gefahren werden kann. Insbesondere während eines Probelaufs in der Entwicklungsphase können nach Erkennen einer derartigen Zugriffsverletzung geeignete Gegenmaßnahmen getroffen werden. Beispielsweise kann eine schnellere CPU im PC eingesetzt, eine Optimierung im BIOS des Betriebssystems oder eine Erhöhung der projektierten Äquidistanzzeit vorgenommen werden. Da ein Entstehen inkonsistenter Datensätze in einer DP-Anwendung bereits an der Fehlerquelle erkannt wird, können frühzeitig geeignete Maßnahmen zur Fehlerbehandlung eingeleitet und evtl. dadurch verursachte Betriebsstörungen oder Schäden an einer prozesstechnischen Anlage vermieden werden.

Wenn der Kommunikationsprozessor das erste Synchronisationssignal durch Ausgabe eines Interrupts an die Recheneinheit zu Beginn des zyklischen Teils eines Zyklus sendet, kann der Interrupt in einfacher Weise nach dem letzten Zugriff der Recheneinheit auf den Speicher freigeschaltet werden, um Zugriffsverletzungen sicher zu erkennen. Da die Recheneinheit nach dem Freischalten des Interrupts in diesem Fall ohnehin keine Zugriffe mehr auf den Speicher ausführt, bedeutet ein rechtzeitiges Freischalten des Interrupts unmittelbar, dass die Recheneinheit keine Zugriffe im zyklischen Teil eines Zyklus durchführt. Die Ausgabe eines Interrupts als erstes Synchronisationssignal stellt dabei ein erprobtes Mittel zur ereignisgesteuerten Bearbeitung programmtechnisch realisierter Abläufe dar.

Wird durch den Kommunikationsprozessor ein zweites Synchronisationssignal durch Ausgabe eines zweiten Interrupts zum Ende des zyklischen Teils eines Zyklus an die Recheneinheit gegeben, so ist in vorteilhafter Weise zudem keine Parametrierung der Dauer des zyklischen Teils eines Zyklus erforderlich. Somit kann auf eine Zeitmessung ab Beginn des zyklischen Teils verzichtet werden, durch welche ohne ein derartiges Synchronisationssignal sichergestellt werden könnte, dass die Recheneinheit nicht während der Übertragung der Nutzdaten auf den Speicher zugreift. Die DP-Anwendung der Recheneinheit kann unmittelbar bei Eintreffen des zweiten Interrupts aktiviert werden und Zugriffe auf den Speicher ausführen. In diesem Fall schaltet die Recheneinheit nach Ende der Zugriffe auf den Speicher den ersten und zweiten Interrupt wieder frei. Auch der Zeitraum zwischen zwei aufeinanderfolgenden Interrupts des zweiten Typs kann zur Erkennung eines Zugriffs ohne Zugriffsberechtigung herangezogen werden.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:
- Figur 1: ein Blockschaltbild eines Netzwerks mit mehreren Teilnehmern,
- Figur 2: ein Zeitdiagramm zur Erläuterung des Äquidistanzbetriebs bei Profibus DP (Stand der Technik),
- Figur 3: ein Signalflussbild zur Erläuterung des Zusammenspiels der Komponenten eines Teilnehmers,
- Figur 4: ein Zeitdiagramm zur Erläuterung des Zusammenspiels im fehlerfreien Fall,
- Figuren 5 und 6: Zeitdiagramme zur Erläuterung des Zusammenspiels bei Fehlerfällen.

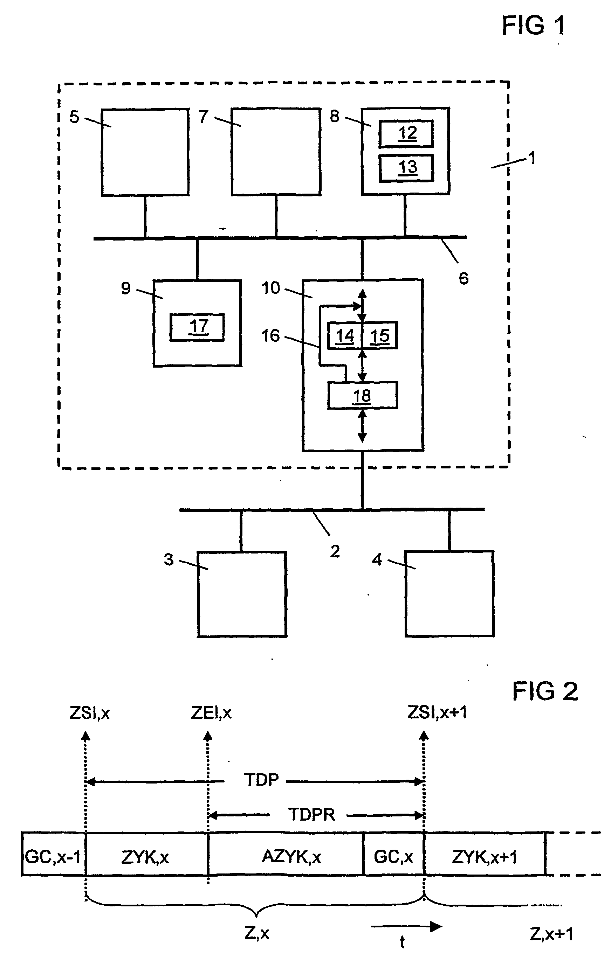

In Figur 1 ist eine einfache automatisierungstechnische Anlage zur Steuerung eines Prozesses dargestellt, die einen Personal Computer 1 und einen daran angeschlossenen Feldbus 2, der als Profibus DP ausgeführt ist, mit einem Sensor 3 und einem Aktuator 4 aufweist. Der Personal Computer enthält einen Prozessor 5, der über einen PCI-Bus 6 mit einem Arbeitsspeicher 7, einem Programmspeicher 8 und einem Laufwerk 9 verbunden ist. Weitere Komponenten des Personal Computers sind der Übersichtlichkeit wegen nicht dargestellt. Auf dem Personal Computer ist ein Betriebssystem, beispielsweise Windows NT, geladen, das nicht echtzeitfähig ist. Die Schnittstelle zwischen dem Personal Computer 1 und dem Feldbus 2 bildet eine Steckkarte 10, die in den Personal Computer 1 gesteckt und an den PCI-Bus 6 angeschlossen ist. Über diese Steckkarte 10, die auch als Kommunikationsprozessor bezeichnet wird, kann ein Steuerprogramm 12, das als DP-Anwendung im Personal Computer 1 abläuft, Messdaten einlesen, die durch den Sensor 3 am Prozess erfasst werden, und Stellbefehle an den Aktuator 4 ausgeben, der als Stellglied auf den Prozess einwirkt. Dazu werden über den Feldbus 2 Nutzdaten zyklisch zwischen den angeschlossenen Teilnehmern 1, 3 und 4 ausgetauscht. Der Kommunikationsprozessor 10 bildet einen Profibus DP Master, der den Sensor 3 und den Aktuator 4, die beide als Profibus DP Slaves betrieben werden, zyklisch zu einem Datenaustausch aufruft. Die DP-Anwendung 12 und ein Device-Treiber 13 für den Kommunikationsprozessor 10 sind in den Programmspeicher 8 des Personal Computers 1 geladen. Bei der Installation können die zum Betrieb der Recheneinheit erforderlichen Programme von einem Speichermedium 17, das in das Laufwerk 9 eingesetzt wird, in den Programmspeicher 8 geladen werden. Der Prozessor 5, der gemeinsam mit dem Arbeitsspeicher 7 und dem Programmspeicher 8 eine Recheneinheit bildet, kann über den PCI-Bus 6 auf Speicher 14 und 15 des Kommunikationsprozessors 10 zugreifen, die als Dual-Port-RAM ausgeführt sind und in welchen ein Prozessabbild gehalten wird. Über Interrupts 16 kann der Kommunikationsprozessor 10 Synchronisationssignale an die Recheneinheit ausgeben.

Figur 2 zeigt den zeitlichen Aufbau eines Zyklus Z,x im Äquidistanzbetrieb des Profibus DP, der bereits eingangs näher erläutert wurde. Lediglich in einem Zeitabschnitt TDPR, der außerhalb des zyklischen Teils ZYK,x des Zyklus Z,x liegt, dürfen von der Recheneinheit Zugriffe auf das Prozessabbild in den Speichern 14 und 15 durchgeführt werden.

In Figur 3 ist das Zusammenspiel der einzelnen, zum Teil durch Software realisierten Instanzen dargestellt. Der Kommunikationsprozessor 10 gibt während eines Zyklus einen Zyklus-Start- und einen Zyklus-Ende-Interrupt entsprechend einem Pfeil 30 an eine Device-Treiber-Instanz 31 aus. Die Device-Treiber-Instanz 31 wird durch Abarbeiten z.B. des unter Windows NT als Programm ablauffähigen Device-Treibers 13 realisiert. Von der Device-Treiber-Instanz 31 wird die Zeitdifferenz zwischen dem vorangegangenen und dem aktuellen Interrupt des gleichen Typs ermittelt. Weiterhin überprüft sie diese Zeitdifferenz auf Plausibilität zu einer projektierten Äquidistanzzeit TDP. Ist die Zeitdifferenz größer als die projektierte Äquidistanzzeit TDP zuzüglich eines geringfügigen Toleranzzuschlags, so liegt eine Zugriffsverletzung seitens eines DP-Bearbeitungs-Threads 32 vor. In diesem Fall wird der DP-Bearbeitungs-Thread 32, wie es durch einen Pfeil 33 in Figur 3 angedeutet ist, über den Fehler informiert. In einer praktischen Realisierung kann die Anzeige eines erfolgten Zugriffs ohne Zugriffsberechtigung z.B. durch Inkrementieren eines Fehlerzählers in einem Dual-Port-RAM, der vom DP-Bearbeitungs-Thread 32 zyklisch abgefragt werden kann, erfolgen. Im Falle eines Zyklus-Ende-Interrupts wird der DP-Bearbeitungs-Thread 32 durch die Device-Treiber-Instanz 31 entsprechend einem Pfeil 34 aktiviert. Diese Aktivierung kann beispielsweise durch Setzen einer gemeinsamen Windows-Semaphore erfolgen, an welcher der DP-Bearbeitungs-Thread 32 jeweils nach Durchlaufen einer Regelschleife wartet. Selbstverständlich sind alternativ zur Windows-Semaphore auch andere Methoden zur Synchronisation programmtechnisch realisierter Instanzen anwendbar.
Nach seiner Aktivierung greift der DP-Bearbeitungs-Thread 32 beispielsweise zur Bearbeitung eines Regelalgorithmus auf ein in einem Speicherbereich des Dual-Port-RAM des Kommunikationsprozessors 10 gehaltenes Prozessabbild zum Einlesen der Messdaten und Ausgeben der damit berechneten Steuerdaten entsprechend einem Pfeil 36 zu und schaltet danach den Zyklus-Start-Interrupt und den Zyklus-Ende-Interrupt des Kommunikationsprozessors 10 wieder frei. Das Freischalten der Interrupts ist in Figur 3 durch einen Pfeil 37 angedeutet. Anschließend wartet der DP-Bearbeitungs-Thread 32 auf das Ausgeben des Zyklus-Ende-Interrupts im darauffolgenden Zyklus. Dieser schleifenförmige Durchlauf ist im DP-Bearbeitungs-Thread 32 durch eine unterbrochene, mit Pfeilen gezeichnete Schleife symbolisch dargestellt.

Die Zeitdiagramme in den Figuren 4, 5 und 6 zeigen jeweils anhand von drei aufeinanderfolgenden Zyklen für den fehlerfreien Fall sowie für zwei typische Fehlersituationen, wie die Zugriffsverletzungen erkannt werden und wie der DP-Bearbeitungs-Thread 32 und die Device-Treiber-Instanz 31 im Detail zusammenspielen. Durch die Lage der Pfeile in den verschiedenen horizontalen Ebenen sind die an den jeweiligen Aktionen beteiligten Komponenten bestimmt. Wegen der schleifenförmigen Grundstruktur sind einer Komponente, dem Kommunikationsprozessor 10, zur übersichtlichen Darstellung zwei Ebenen zugeordnet. Eine Zeitachse t verläuft jeweils von der linken zur rechten Seite der Darstellungen. Die Zyklen Z1, Z2 und Z3 werden der Anschaulichkeit wegen nur durch die Zeitpunkte Ts1, Ts2 und Ts3 bzw. Te1, Te2 und Te3 ihrer Zyklus-Start-Interrupts und Zyklus-Ende-Interrupts repräsentiert.

In Figur 4 ist der folgende Ablauf dargestellt. Der Kommunikationsprozessor 10 löst in den Zeitpunkten Ts1, Ts2 und Ts3 jeweils eine Zyklus-Start-Interrupt und in den Zeitpunkten Te1, Te2, Te3 jeweils einen Zyklus-Ende-Interrupt aus. Bedingt durch Laufzeiten im PC werden diese Interrupts zeitverzögert an die Device-Treiber-Instanz 31 gemeldet. Die Zeitpunkte des Eintreffens der Meldungen sind in Figur 4 mit T's1, T's2 und T's3 bzw. T'e1, T'e2 und T'e3 bezeichnet. Die Device-Treiber-Instanz 31 ermittelt anhand dieser Zeitpunkte jeweils die Zeitdauer zwischen Eintreffen zweier Interrupts gleicher Art. Beispielsweise wird eine Zeitdauer ΔT's2,1, die der Differenz der Zeitpunkte T's2 und T's1 des Eintreffens der Zyklus-Start-Interrupts des Zyklus Z2 und des Zyklus Z1 entspricht, ermittelt zu: ΔT's2,1 = T's2-T's1. In analoger Weise werden auch die weiteren Zeitdauern ΔT's3,2, ΔT'e2,1 und ΔT'e3,2 ermittelt. Jeweils zu den Zeitpunkten T'e1, T'e2 und T'e3, an welchen die Zyklus-Ende-Interrupts der Zyklen Z1, Z2 bzw. Z3 bei der Device-Treiber-Instanz 31 eintreffen, aktiviert die Device-Treiber-Instanz 31 den wartenden DP-Bearbeitungs-Thread 32, beispielsweise durch Setzen einer gemeinsamen Windows-Semaphore. Bedingt durch die Programmlaufzeiten im PC erfolgt diese Aktivierung ebenfalls mit einer gewissen Zeitverzögerung zu den Zeitpunkten T"e1, T"e2 und T"e3. Der DP-Bearbeitungs-Thread 32 führt danach nachstehende Aktionen durch:
1. zu Zeitpunkten Ta1, Ta2 und Ta3 in den Zyklen Z1, Z2 bzw. Z3 wird der Zyklus-Ende-Interrupt für den Kommunikationsprozessor 10 freigeschaltet, damit im jeweils nächsten Zyklus wieder ein neuer Zyklus-Ende-Interrupt ausgelöst werden kann,
2. der DP-Bearbeitungs-Thread 32 greift während Zeitintervallen Tb1, Tb2 und Tb3 auf das Prozessabbild im Dual-Port-RAM des Kommunikationsprozessors 10 zu, um Eingabedaten der an den Feldbus angeschlossenen Slaves zu lesen, diese entsprechend seinem Regelalgorithmus auszuwerten und neue Ausgabedaten einzuschreiben und
3. durch den DP-Bearbeitungs-Thread 32 werden Zyklus-Start-Interrupts zu Zeitpunkten Tc1, Tc2 und Tc3 für den Kommunikationsprozessor 10 freigeschaltet, damit dieser im jeweils nächsten Zyklus wieder einen neuen Zyklus-Start-Interrupt ausgeben kann.

Alternativ dazu können die Aktionen 1 und 3 auch beide nach der Aktion 2 ausgeführt werden.

Ein Zugriff ohne Zugriffsberechtigung wird durch Überprüfen der Zeitdauern ΔT'sx,x-1 und ΔT'ex,x-1 mit x = 1,2,3.... erkannt. Ist eine Zeitdauer größer als die projektierte Äquidistanzzeit TDP zuzüglich eines Toleranzzuschlags, so wird ein Zugriff ohne Zugriffsberechtigung festgestellt und angezeigt. Wenn die gemessenen Zeitdauern den Wert Null haben, kann ebenfalls auf einen Zugriff ohne Zugriffsberechtigung geschlossen werden. Der Toleranzzuschlag ist ein Wert für die zulässige Toleranz der gemessenen Zeitdauer gegenüber dem projektierten Äquidistanzwert. In dem in Figur 4 dargestellten fehlerfreien Fall erfolgen alle Zugriffe des DP-Bearbeitungs-Thread 32 jeweils im azyklischen Teil der Zyklen. Die ermittelten Zeitdauern liegen innerhalb des zulässigen Bereichs.

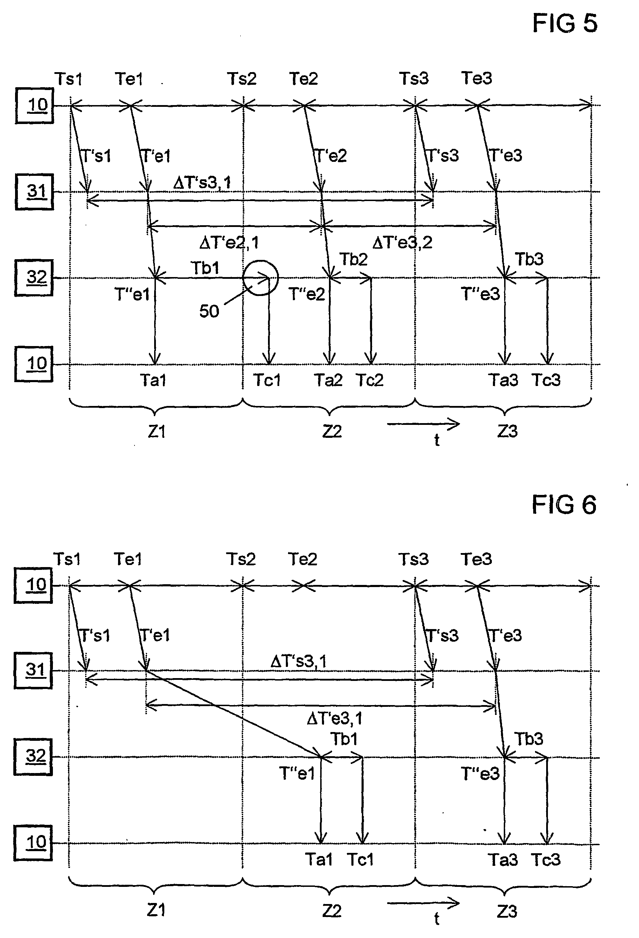

Figur 5 zeigt ein Beispiel aufeinanderfolgender Zyklen, bei welchem der Zugriff des DP-Bearbeitungs-Threads 32 auf das Dual-Port-RAM während der Zeitdauer Tb1 zu lange dauert. Ein Teil des Zugriffs auf das Dual-Port-RAM erfolgt im azyklischen Teil des Zyklus Z1, der restliche Teil jedoch im zyklischen Teil des darauf folgenden Zyklus Z2 und stellt somit einen Zugriff ohne Zugriffsberechtigung dar. Diese Zugriffsverletzung ist in Figur 5 durch einen Kreis 50 markiert. Sie bewirkt, dass der DP-Bearbeitungs-Thread 32 den Zyklus-Start-Interrupt erst zu einem Zeitpunkt Tc1, also zu spät freischaltet. Somit kann der Kommunikationsprozessor 10 keinen Zyklus-Start-Interrupt zum Zeitpunkt Ts2 im Zyklus Z2 ausgeben und erst im Zyklus Z3 kann erneut ein Zyklus-Start-Interrupt zum Zeitpunkt Ts3 durch den Kommunikationsprozessor 10 erzeugt und ausgegeben werden. Die durch die Device-Treiber-Instanz 31 ermittelte Zeitdauer ΔT's3,1 beträgt das zweifache der projektierten Äquidistanzzeit TDP und liegt somit weit außerhalb des zulässigen Bereichs. Die Zugriffsverletzung wird von der Device-Treiber-Instanz 31 durch Überprüfen dieser Zeitdauer sicher erkannt, so dass durch Anzeigen dieses Fehlers und Einleiten einer geeigneten Fehlerbehandlung schwerwiegende Folgen des Fehlers in einem zu steuernden technischen Prozess vermieden werden können.

In Figur 6 ist ein Beispiel dreier Zyklen Z1, Z2 und Z3 dargestellt, bei welchem die Aktivierung des DP-Bearbeitungs-Thread in Folge von beispielsweise Verdrängungseffekten im PC zu lange hinausgezögert wird. Aufgrund dieser Verzögerung wird der azyklische Teil des Zyklus Z1 vollständig übersprungen und Zugriffe des DP-Bearbeitungs-Thread 32 erfolgen erst im azyklischen Teil des Zyklus Z2. Der somit um etwa eine Äquidistanzzeit TDP verzögerte Zugriff stellt zwar keine Gefährdung der Datenkonsistenz dar, ist jedoch in regelungstechnischer Hinsicht nicht zulässig. In Folge des verspäteten Zugriffs werden durch den DP-Bearbeitungs-Thread 32 der Zyklus-Start-Interrupt und der Zyklus-Ende-Interrupt des Zyklus Z2 nicht rechtzeitig vor den Zeitpunkten Ts2 bzw. Te2 freigeschaltet. Vom Kommunikationsprozessor 10 werden somit zu diesen Zeitpunkten keine Interrupts ausgegeben. Eine Ausgabe von Interrupts erfolgt erst wieder zu Zeitpunkten Ts3 und TE3 im Zyklus Z3. In der Device-Treiber-Instanz 31 wird als Zeitdauer zwischen zwei Interrupts gleichen Typs die Zeitdauer ΔT's3,1 bzw. die Zeitdauer ΔT'e3,1 ermittelt, die das zweifache der projektierten Äquidistanzzeit TDP betragen und somit wiederum außerhalb des zulässigen Bereichs liegen. Auch in diesem Fall wird ein Zugriff außerhalb des zulässigen Bereichs, d.h. ein Zugriff ohne Zugriffsberechtigung, sicher erkannt und es können geeignete Maßnahmen zur Behandlung des Fehlers eingeleitet werden.

## Patentansprüche

1. Verfahren zum Betreiben eines Teilnehmers in einem Netzwerk mit einer Datenübertragung in äquidistanten Zyklen, insbesondere in einem Netzwerk nach der Profibus DP Spezifikation, wobei der Teilnehmer (1) einen Kommunikationsprozessor (10) aufweist, der die zyklische Datenübertragung durchführt, indem er in einem zyklischen Teil (ZYK,x) des Zyklus (Z,x) Daten aus einem Speicher (15) ausliest und an andere Teilnehmer (4) sendet und/oder Daten von anderen Teilnehmern (3) empfängt und in einen Speicher (14) einschreibt, wobei der Teilnehmer (1) weiterhin eine Recheneinheit (5, 7, 8) aufweist, die auf den Speicher (14, 15) zugreifen kann und wobei der Kommunikationsprozessor (10) zumindest ein erstes Synchronisationssignal (16) jeweils zu einem festen Zeitpunkt eines Zyklus (Z,x) an die Recheneinheit sendet, das durch die Recheneinheit freischaltbar ist, **dadurch gekennzeichnet, dass** das erste Synchronisationssignal (16) nach seinem Absenden gesperrt wird und durch die Recheneinheit nur dann wieder freigeschaltet wird, wenn diese keine Zugriffe auf den Speicher (14, 15) innerhalb des zyklischen Teils (ZYK,x) ausführt, dass der Zeitraum (ΔT's2,1, ΔT'e2,1) zwischen zwei aufeinanderfolgenden ersten Synchronisationssignalen ermittelt wird und dass ein Zugriff ohne Zugriffsberechtigung festgestellt und angezeigt wird, wenn der Zeitraum größer als die Dauer (TDP) eines Zyklus (Z,x) ist.

2. Verfahren nach Anspruch 1, **dadurch gekennzeichnet, dass** der Kommunikationsprozessor (10) das erste Synchronisationssignal (16) durch Ausgabe eines Interrupts (ZSI,x) an die Recheneinheit zu Beginn des zyklischen Teils (ZYK,x) eines Zyklus (Z,x) sendet.

3. Verfahren nach Anspruch 2, **dadurch gekennzeichnet, dass** der Kommunikationsprozessor (10) ein zweites Synchronisationssignal (16) durch Ausgabe eines zweiten Interrupts (ZEI,x) eines zweiten, vom Typ des ersten Interrupts (ZSI,x) verschiedenen Typs an die Recheneinheit (5, 7, 8) zum Ende des zyklischen Teils (ZYK,x) eines Zyklus (Z,x) sendet, dass die Recheneinheit nach Ende der Zugriffe auf den Speicher (14, 15) den ersten Interrupt (ZSI,x) und den zweiten Interrupt (ZEI,x) wieder freischaltet, dass der Zeitraum (ΔT'e2,1) zwischen zwei aufeinanderfolgenden Interrupts des zweiten Typs ermittelt wird und dass ein Zugriff ohne Zugriffsberechtigung festgestellt und angezeigt wird, wenn der Zeitraum größer als die Dauer (TDP) eines Zyklus ist.

4. Teilnehmer für ein Netzwerk mit einer Datenübertragung in äquidistanten Zyklen, insbesondere für ein Netzwerk nach der Profibus DP Spezifikation, der einen Kommunikationsprozessor (10) aufweist, der die zyklische Datenübertragung durchführt, indem er in einem zyklischen Teil (ZYK,x) des Zyklus (Z,x) Daten aus einem Speicher (15) ausliest und an andere Teilnehmer (4) sendet und/oder Daten von anderen Teilnehmern (3) empfängt und in einen Speicher (14) einschreibt, wobei der Teilnehmer (1) weiterhin eine Recheneinheit (5, 7, 8) aufweist, die auf den Speicher (14, 15) zugreifen kann, und wobei der Kommunikationsprozessor (10) zumindest ein erstes Synchronisationssignal (16) jeweils zu einem festen Zeitpunkt (TSX,x=1,2,3) eines Zyklus (Z,x) an die Recheneinheit sendet, das durch die Recheneinheit freischaltbar ist, **dadurch gekennzeichnet**, das der Teilnehmer dazu ausgebildet ist, dass erste Synchronisationssignal nach seinem Absenden zu sperren und durch die Recheneinheit nur dann wieder freizuschalten, wenn diese keine Zugriffe auf den Speicher (14, 15) innerhalb des zyklischen Teils (ZYK,x) ausführt, und dass der Teilnehmer weiterhin dazu ausgebildet ist, den Zeitraum zwischen zwei aufeinanderfolgenden ersten Synchronisationssignalen zu ermitteln und einen Zugriff ohne Zugriffsberechtigung festzustellen und anzuzeigen, wenn der Zeitraum größer als die Dauer (TDP) eines Zyklus (Z,x) ist.

5. Speichermedium mit einem Programm, das zur Durchführung des Verfahrens nach einem der Ansprüche 1 bis 3 auf einer Recheneinheit (5, 7, 8) eines Teilnehmers (1) in einem Netzwerk ladbar ist.

## Claims

1. Method for operating a subscriber in a network in which data is transmitted in equidistant cycles, in particular in a network conforming to the Profibus DP specification, wherein the subscriber (1) has a communications processor (10) which performs the cyclic data transmission by reading data from a memory (15) in a cyclic part (ZYK,x) of the cycle (Z,x) and transmitting said data to other subscribers (4) and/or by receiving data from other subscribers (3) and writing said data into a memory (14), with the subscriber (1) further comprising an arithmetic unit (5, 7, 8) which can access the memory (14, 15) and with the communications processor (10) sending at least a first synchronisation signal (16) to the arithmetic unit at a fixed instant in each cycle (Z,x), which first synchronisation signal can be enabled by the arithmetic unit,
**characterised in that** after being sent, the first synchronisation signal (16) is disabled and is only re-enabled by the arithmetic unit when the latter is not performing accesses to the memory (14, 15) within the cyclic part (ZYK,x), that the time interval (ΔT's2,1, ΔT'e2,1) between two successive first synchronisation signals is determined, and that an access without access authorisation is detected and signalled if the time interval is greater than the duration (TDP) of a cycle (Z, x).

2. Method according to claim 1, **characterised in that** the communications processor (10) sends the first synchronisation signal (16) by outputting an interrupt (ZSI,x) to the arithmetic unit at the start of the cyclic part (ZYK,x) of a cycle (Z,x).

3. Method according to claim 2, **characterised in that** the communications processor (10) sends a second synchronisation signal (16) by outputting a second interrupt (ZEI,x) of a second type that is different from the type of the first interrupt (ZSI,x) to the arithmetic unit (5, 7, 8) at the end of the cyclic part (ZYK,x) of a cycle (Z,x), that the arithmetic unit re-enables the first interrupt (ZSI,x) and the second interrupt (ZEI,x) after completing the accesses to the memory (14, 15), that the time interval (ΔT'e2,1) between two successive interrupts of the second type is determined, and that an access without access authorisation is detected and signalled if the time interval is greater than the duration (TDP) of a cycle.

4. Subscriber for a network in which data is transmitted in equidistant cycles, in particular for a network conforming to the Profibus DP specification, which subscriber comprises a communications processor (10) which performs the cyclic data transmission by reading data from a memory (15) in a cyclic part (ZYK,x) of the cycle (Z,x) and transmitting said data to other subscribers (4) and/or by receiving data from other subscribers (3) and writing said data into a memory (14), with the subscriber (1) further comprising an arithmetic unit (5, 7, 8) which can access the memory (14, 15) and with the communications processor (10) sending at least a first synchronisation signal (16) to the arithmetic unit at a fixed instant (TSX,x=1,2,3) in each cycle (Z,x), which first synchronisation signal can be enabled by the arithmetic unit, **characterised in that** the subscriber is embodied to disable the first synchronisation signal (16) after it has been sent and to re-enable the signal by means of the arithmetic unit only when the latter is not accessing the memory (14, 15) within the cyclic part (ZYK,x), and that the subscriber is further embodied to determine the time interval between two successive first synchronisation signals and to detect and signal an access without access authorisation if the time interval is greater than the duration (TDP) of a cycle (Z,x).

5. Storage medium containing a program product which can be loaded in order to perform the method according to one of the claims 1 to 3 on an arithmetic unit (5, 7, 8) of a subscriber (1) in a network.

## Revendications

1. Procédé pour faire fonctionner un utilisateur dans un réseau avec une transmission de données dans des cycles équidistants, notamment dans un réseau selon la spécification Profibus DP, dans lequel l'utilisateur (1) comporte un processeur de communication (10) qui réalise la transmission de données cyclique en lisant des données dans une mémoire (15) pendant une partie cyclique (ZYK,x) du cycle (Z,x) et envoyant ces données à d'autres utilisateurs (4) et/ou en recevant des données d'autres utilisateurs (3) et écrivant ces données dans une mémoire (14), dans lequel l'utilisateur (1) comporte aussi une unité de calcul (5, 7, 8) qui peut accéder à la mémoire (14, 15) et dans lequel le processeur de communication (10) envoie au moins un premier signal de synchronisation (16) à chaque fois à un instant fixe d'un cycle (Z,x) à l'unité de calcul, lequel signal de synchronisation peut être déconnecté par l'unité de calcul, **caractérisé par le fait que** le premier signal de synchronisation (16) est bloqué après son émission et n'est à nouveau déconnecté par l'unité de calcul que lorsque celle-ci n'exécute pas d'accès à la mémoire (14, 15) pendant la partie cyclique (ZYK,x), que l'intervalle de temps (ΔT's2,1, ΔT'e2,1) entre deux premiers signaux de synchronisation successifs est déterminé et qu'un accès sans autorisation d'accès est constaté et signalé lorsque l'intervalle de temps est plus grand que la durée (TDP) d'un cycle (Z,x).

2. Procédé selon la revendication 1, **caractérisé par le fait que** le processeur de communication (10) envoie le premier signal de synchronisation (16) en fournissant une interruption (ZSI,x) à l'unité de calcul au début de la partie cyclique (ZYK,x) d'un cycle (Z,x).

3. Procédé selon la revendication 2, **caractérisé par le fait que** le processeur de communication (10) envoie un deuxième signal de synchronisation (16) en fournissant une deuxième interruption (ZEI,x) d'un deuxième type différent du type de la première interruption (ZSI,x) à l'unité de calcul (5, 7, 8) à la fin de la partie cyclique (ZYK,x) d'un cycle (Z,x), que l'unité de calcul à la fin des accès à la mémoire (14, 15) déconnecte à nouveau la première interruption (ZSI,x) et la deuxième interruption (ZEI,x), que l'intervalle de temps (ΔT'e2,1) entre deux interruptions successives du deuxième type est déterminé et qu'un accès sans autorisation d'accès est constaté et signalé lorsque l'intervalle de temps est plus grand que la durée (TDP) d'un cycle.

4. Utilisateur pour un réseau avec une transmission de données dans des cycles équidistants. notamment pour un réseau selon la spécification Profibus DP, qui comporte un processeur de communication (10) qui réalise la transmission de données cyclique en lisant des données dans une mémoire (15) pendant une partie cyclique (ZYK,x) du cycle (Z,x) et envoyant ces données à d'autres utilisateurs (4) et/ou en recevant des données d'autres utilisateurs (3) et écrivant ces données dans une mémoire (14), l'utilisateur (1) comportant aussi une unité de calcul (5, 7, 8) qui peut accéder à la mémoire (14, 15) et le processeur de communication (10) envoyant au moins un premier signal de synchronisation (16) à chaque fois à un instant fixe (TSX,x = 1, 2, 3) d'un cycle (Z,x) à l'unité de calcul, lequel premier signal de synchronisation peut être déconnecté par l'unité de calcul, **caractérisé par le fait que** l'utilisateur est conçu de manière à bloquer le premier signal de synchronisation après son émission et à ne le déconnecter à nouveau au moyen de l'unité de calcul que lorsque celle-ci n'exécute pas d'accès à la mémoire (14, 15) pendant la partie cyclique (ZYK,x) et que l'utilisateur est aussi conçu de manière à déterminer l'intervalle de temps entre deux premiers signaux de synchronisation successifs et à constater et signaler un accès sans autorisation d'accès lorsque l'intervalle de temps est plus grand que la durée (TDP) d'un cycle (Z,x).

5. Support mémoire avec un programme qui peut être chargé pour la mise en oeuvre du procédé selon l'une des revendications 1 à 3 sur une unité de calcul (5, 7, 8) d'un utilisateur (1) dans un réseau.
